# EUROPÄISCHE PATENTSCHRIFT

(11) **EP 1 733 775 B1**
(45) Veröffentlichungstag und Bekanntmachung des Hinweises auf die Patenterteilung: **15.04.2009**
(21) Anmeldenummer: 06012125.8
(22) Anmeldetag: 13.06.2006
(51) Int. Cl.: B01D 35/027, B01D 35/143

(54) **Filtervorrichtung**
Filter apparatus
Dispositif filtrant

(30) Priorität: 16.06.2005 DE 102005027920
(43) Veröffentlichungstag der Anmeldung: 20.12.2006
(73) Patentinhaber: IBS Filtran Kunststoff-/Metallerzeugnisse GmbH, 51597 Morsbach (DE)
(72) Erfinder: Beer, Markus, 51597 Morsbach (DE); Dedering, Michael, 51597 Morsbach-Lichtenberg (DE); Jacob, Michael, 51597 Morsbach (DE); Stausberg, Wolfgang, 51597 Morsbach (DE)
(74) Vertreter: Lang, Friedrich

(56) Entgegenhaltungen:
- DE-A1- 3 632 655
- DE-U1- 20 006 981
- DE-U1- 20 308 834
- FR-A- 1 407 307
- US-A1- 2002 011 435

## Beschreibung

Die Erfindung betrifft eine Filtervorrichtung zur Filterung eines Fluids, beispielsweise einen Ölfilter, welche zumindest ein filterndes Medium und einen Bypass für das filternde Medium aufweist.

Aus US 4,402,827 ist bekannt, einen Saugölfilter für Automatikgetriebe mit einem feinfilternden Filtermedium und einem Bypass auszubilden, der mit einem Grobfiltermedium versehen ist. Bei tiefen Temperaturen, wenn das Fluid hochviskos ist, kann es durch das Grobfiltermedium passieren und ein Druckabfall fällt gering aus. Bei höheren Temperaturen, wenn das Fluid niederviskos ist, kann es durch das Feinfiltermedium hindurchtreten, so dass eine höhere Filtrationseffizienz erzielt wird.

Bei einer solchen Anordnung tritt jedoch auch bei höheren Temperaturen immer ein Stromanteil durch das Grobfiltermedium, so dass für diesen Anteil nur eine geringe Reinigung des Fluids erreichbar ist. Aufgrund der zunehmenden Anforderungen bei Automatikgetrieben oder bei Verbrennungsmotoren im Hinblick auf eine hohe Filtrationsleistung ist es jedoch erforderlich, zusätzlich zu einem Saugölfilter noch einen Druckölfilter vorzusehen, der üblicherweise mit einem Feinstfiltermedium versehen ist, Damit ist es möglich, eine hohe Filtrationsleistung zu erzielen. Es hat sich jedoch gezeigt, dass eine solche Kombination aus zwei Filtern relativ aufwändig und teuer sein kann.

Es ist daher eine Aufgabe der Erfindung, eine Filtervorrichtung zur Filterung eines Fluids zu schaffen, welche eine so hohe Filtrationseffizienz und hohe Schmutzaufnahmekapazität besitzt, dass die Standzeit eines Druckölfilters bzw. dessen Wechselintervalle deutlich verlängert werden können oder der Einsatz eines Druckölfilters gar nicht mehr erforderlich ist. Ferner ist es eine Aufgabe der Erfindung, eine Filtervorrichtung zur Filterung eines Fluids zu schaffen, welche sich mindestens zum Teil selbst reinigen kann.

Erfindungsgemäß wird diese Aufgabe durch den Gegenstand des Anspruchs 1 gelöst. Vorteilhafte Ausführungsformen sind in den Interansprüchen beschrieben.

Damit ist es möglich, zum Beispiel bei höheren Fluidtemperaturen das zu reinigende Fluid nur noch durch das filternde Medium passieren zu lassen, während durch den Bypass kein Volumenstrom hindurchtritt. Der Druckabfall bleibt bei höheren Fluidtemperaturen somit relativ gering, während eine hohe Filtrationseffizienz erreicht wird. Bei tiefen Fluidtemperaturen kann mittels des Stellgliedes der Bypass freigegeben und durchströmt werden, während aufgrund der relativ hohen Viskosität des Fluids durch das filternde Medium nur ein geringer Volumenstrom hindurchtritt. Durch das Stellglied kann somit eine höhere Filtrationseffizienz erreicht werden.

Gemäß einer bevorzugten Ausführungsform der Erfindung ist das Stellglied in Abhängigkeit von einer Stellgröße steuerbar. Dies kann prinzipiell jede Größe sein, um ein Stellglied in seiner Funktion zu beeinflussen. Bevorzugt eignet sich als Stellgröße ein Differenzdruck zwischen der Anströmseite und der Abströmseite des von Fluid durchströmbaren filternden Mediums oder eine Temperatur des Fluides. Dies liegt darin begründet, dass die Viskosität des Fluides stark temperaturabhängig ist und einen entsprechenden Differenzdruck am Filtermedium bewirkt. Zum Beispiel kann bei einer relativ tiefen Temperatur von -40 °C die Viskosität eines Fluids so hoch sein, dass fast kein Fluid durch ein fein filterndes Filtermedium hindurchtritt.

Vorzugsweise weist bei der erfindungsgemäßen Filtervorrichtung das Stellglied eine Klappe oder einen Schieber oder ein Ventil auf. Derartige Bauteile ermöglichen auf einfache Weise eine mechanische Umleitung des Volumenstromes. Die Positionierung des Stellgliedes in eine Lage, in der das grob filternde Medium vollständig, nur noch teilweise oder gar nicht mehr von Fluid durchströmt wird, kann derart erfolgen, dass das Stellglied federnd gehalten ist. Durch eine federnde Halterung ist eine Andrückkraft auf das Stellglied vorgegeben, gegen welche eine Kraft durch den Volumenstrom des Fluides wirkt. Bei hochviskosem Fluid wird das federnde Stellglied zum Beispiel weit zurückgedrängt, während ein niederviskoses Fluid nur noch eine geringe Kraft gegen das Stellglied aufbringen kann. Es ist auch möglich, das Stellglied selbst federnd auszubilden. Damit kann eine federnde Halterung eingespart werden, so dass das Stellglied nur ein Bauelement aufweist. Bevorzugt ist ein Stellorgan aus einem temperatursensitiven Werkstoff, der bei Überschreiten einer Grenztemperatur seine Geometrie in eine vorbestimmte Weise ändert (z.B. Memory-Metall). Zur weiteren Erhöhung der Filtrationsleistung ist es vorteilhaft, dass das Stellglied als weiteres filterndes Medium ausgebildet ist, dessen Durchlässigkeit für niedrige Viskosität ausgelegt ist. Bei niedriger Viskosität wirkt es wie das übrige Filtermedium, so dass keine Filterfläche verloren geht. Bei hoher Viskosität gibt es den Bypass frei.

Bei einer bevorzugten Ausführungsform der Erfindung ist das feiner filternde Medium ein Feinstfiltermedium. Bei niedrigviskosem Fluid wird somit eine hohe Filtrationsleistung erzielt. Sind das grob filternde Medium und das Feinstfiltermedium in Parallelschaltung zueinander angeordnet, kann ein hochviskoses Fluid, z.B. bei einem Motorstart, durch das grob filternde Medium geleitet werden. Steigt die Temperatur an und sinkt die Viskosität entsprechend ab, kann ein zunehmend höherer Anteil des Fluides durch das Feinstfiltermedium strömen, so dass die Filtrationsleistung stetig erhöht wird. Ist zum Feinstfiltermedium ein Feinfiltermedium seriell geschaltet, lässt sich die Filtrationsleistung noch weiter erhöhen. Niedrigviskoses Fluid passiert dann zuerst ein Feinfiltermedium, in welchem Schmutzpartikel fein ausgefiltert werden, bevor dieses ausgefilterte Fluid anschließend ein Feinstfiltermedium passiert, in dem eine Feinstfilterung erfolgt.

Gemäß einer weiteren Ausführungsform der Erfindung ist das feiner filternde Medium ein Feinfiltermedium, während das grob filternde Medium und das Feinfiltermedium in Serienschaltung zueinander angeordnet sind. Damit wird bei tiefen Fluidtemperaturen zumindest die Filtrationsleistung eines herkömmlichen Saugölfilters erreicht. Bei höheren Temperaturen lässt sich die Filtrationsleistung erhöhen, indem zum Feinfiltermedium ein Feinstfiltermedium in Serienschaltung zueinander angeordnet ist. Damit durchströmt das zu reinigende Fluid sowohl ein Feinfiltermedium als auch ein Feinstfiltermedium. Sind das grob filternde Medium und das Feinstfiltermedium in Parallelschaltung zueinander angeordnet, kann bei tiefen Temperaturen das grob filternde Medium einen großen Stromanteil durchströmen lassen, während bei zunehmenden Temperaturen das Stellglied den Fluiddurchtritt durch das grob filternde Medium immer stärker unterdrückt, bis das Fluid nur noch durch das Feinfiltermedium und das Feinstfiltermedium passiert. Damit kann die Filtrationsleistung eines üblicherweise kombinierten Filtersystems aus Saugölfilter und nachgeschaltetem Druckölfilter durch nur noch eine Filtervorrichtung erzielt werden.

Bevorzugt lässt das Feinstfiltermedium Partikel mit einer Größe von kleiner 5 *µ*m hindurch. Damit kann die Filtrationsleistung eines Druckölfilters erzielt werden. Lässt das Feinfiltermedium Partikel mit einer Größe von kleiner 50 *µ*m hindurch, wird nur durch dieses Filtermedium alleine die Filtrationsleistung eines Standardfiltermediums erzielt.

Ist das filternde Medium als einlagiges Fluidfiltermedium ausgebildet, sind bei einem Austauschvorgang eines derartigen Filtermediums nur relativ wenige Aspekte zu beachten, so dass der Vorgang mit relativ wenigen Komplikationen durchführbar ist.

Bevorzugt kommt bei der Filtervorrichtung mindestens ein filterndes Medium zum Einsatz, welches als plissiertes Fluidfiltermedium ausgebildet ist. Dies ermöglicht eine deutliche Vergrößerung der wirksamen Filtrationsfläche bei gleicher oder nahezu gleicher Baugröße der Filtervorrichtung, so dass eine noch höhere Filtrationsleistung erzielt werden kann. Ein plissiertes Filtermedium kann zum Beispiel eine Filtertasche sein, welche einmal gefaltet ist. Jedoch kann das plissierte Filtermedium auch mehrfach gefaltet sein, so dass parallel geschaltete Filtermedien durchströmt werden können.

Die erfindungsgemäße Filtervorrichtung ist bei einem Automatikgetriebe eines Kraftfahrzeuges einsetzbar. Dies ist vorteilhaft, da sich somit ein hoher Wirkungsgrad, eine hohe Leistungsfähigkeit und ein hoher Schaltkomfort bei einem Automatikgetriebe erreichen lassen.

Gemäß einer weiteren Ausführungsform der Erfindung ist die Filtervorrichtung in einem Motor eines Kraftfahrzeuges einsetzbar. Da bei einem Kraftfahrzeugmotor Partikel wie zum Beispiel Verbrennungsrückstände, Metallabrieb, Staub u. ä. im Schmierkreislauf zu Schäden führen, können diese Auswirkungen durch Einsatz der erfindungsgemäßen Filtervorrichtung deutlich verringert werden.

Ferner kann die erfindungsgemäße Filtervorrichtung in einem Saugfilter und/oder einem Druckfilter eingesetzt werden. Eine solche Verwendung ist vorteilhaft, da sich durch die erfindungsgemäße Filtervorrichtung eine so hohe Filtrationsleistung bei gleichzeitig niedrigem Druckabfall am Filtermedium erzielen lässt, dass ein Druckölfilter durch einen Saugölfilter ersetzt werden kann.

Erfindungsgemäß ist ferner ein Filter mit einer Filtervorrichtung vorgesehen, wie sie zuvor beschrieben worden ist.

Im Folgenden wird die Erfindung anhand bevorzugter Ausführungsformen mit Bezugnahme auf die Zeichnung erläutert. Es zeigen schematisch:
- Fig. 1: eine Querschnittsansicht einer ersten Ausführungsform der erfindungsgemäßen Filtervorrichtung im kalten Zustand,
- Fig. 2: eine Querschnittsansicht einer ersten Ausführungsform der erfindungsgemäßen Filtervorrichtung im warmen Zustand,
- Fig. 3: eine Querschnittsansicht einer zweiten Ausführungsform der erfindungsgemäßen Filtervorrichtung im kalten Zustand,
- Fig. 4: eine Querschnittsansicht einer dritten Ausführungsform der erfindungsgemäßen Filtervorrichtung im kalten Zustand,
- Fig. 5: eine Querschnittsansicht einer dritten Ausführungsform der erfindungsgemäßen Filtervorrichtung im warmen Zustand,
- Fig. 6: eine Querschnittsansicht der ersten Ausführungsform der erfindungsgemäßen Filtervorrichtung im kalten Zustand mit aufgenommenen Partikeln an einem Filtermedium,
- Fig. 7: eine Querschnittsansicht der ersten Ausführungsform der erfindungsgemäßen Filtervorrichtung im warmen Zustand mit nicht mehr vorhandenen Partikeln an einem Filtermedium,
- Fig. 8: eine Darstellung des Volumenstromes für die erste und zweite Ausführungsform der erfindungsgemäßen Filtervorrichtung, und
- Fig. 9: eine Darstellung des Volumenstromes für die dritte Ausführungsform der erfindungsgemäßen Filtervorrichtung.

In den Figuren sind für gleiche Teile gleiche Bezugszeichen verwendet.

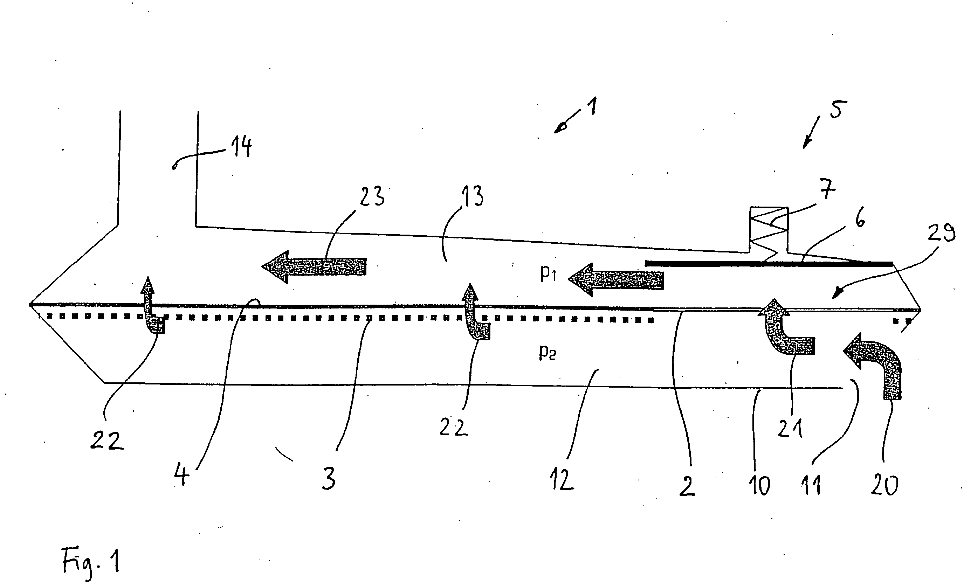

In Figur 1 ist eine schematische Querschnittsansicht einer ersten Ausführungsform einer als Ölfilter ausgebildeten Filtervorrichtung 1 mit einem Filtergehäuse 10 sowie einem Einlass 11 und einem Auslass 14 für ein durch die Filtervorrichtung 1 strömendes Fluid dargestellt. In der Filtervorrichtung 1 ist zwischen Einlass 11 und Auslass 14 ein Filtermedium mit einem Bypass 29 vorgesehen. Das Filtermedium weist ein erstes Filtermedium 4 in Form eines Feinstfilters auf. Der Bypass 29 ist mit einem zweiten Filtermedium 2 versehen, das als Grobfilter ausgebildet ist. In Flussrichtung vor dem ersten Filtermedium kann optional ein drittes Filtermedium 3 in Form eines Feinfilters als Vorfilter angeordnet sein.

Zur Regelung des Volumenstromes durch den Bypass 29 ist ein Stellglied 5 vorhanden, welches eine Platte 6 als Absperrkörper und eine Feder 7 als Stellorgan aufweist. Die Feder 7 ist mit der Platte 6 so gekoppelt, dass die Platte 6 in Richtung zum grob filternden zweiten Filtermedium 2 gegen die Flussrichtung des Fluids gedrückt wird. Die Federkraft bildet die Stellgröße. Die Platte 6 kann undurchlässig sein, so dass sie den Bypass 29 dicht abschließen kann. Alternativ kann die Platte auch als Feinfiltermedium oder als Feinstfiltermedium ausgebildet sein, so dass der Bypass 29 bei geschlossenem Stellglied 5 mit einem Feinfiltermedium bzw. einem Feinstfiltermedium abgedeckt ist.

Die zweiten, dritten und ersten Filtermedien 2, 3 und 4 sind im Wesentlichen in der vertikalen Mitte des Filtergehäuses 10 so platziert, dass eine erste Zone 12 auf der Anströmseite der Filtermedien und eine zweite Zone 13 auf der Abströmseite der Filtermedien geschaffen wird. Das Stellglied 5 ist hier in der flussabwärts liegenden Zone des Filtergehäuses 10 vorgesehen. Es ist so platziert, dass ein Teilvolumenstrom 21 des in den Einlass des Filtergehäuses geleiteten Fluidvolumenstroms 20 gegen eine Andrückkraft der Feder 7 in Richtung zum grob filternden Medium 2 wirken kann. Damit ist es möglich, dass bei kalten Fluidtemperaturen ein entsprechend hochviskoses Fluid dem Stellglied 5 bzw. der Feder 7 eine Druckkraft entgegensetzen kann, die so groß ist, dass die Platte 6 des Stellgliedes 5 den Bypass 29 freigibt. Der durch den Bypass 29 strömende Stromanteil 21 gelangt somit in die zweite Zone 13 (Anströmseite) des Filtergehäuses 10 und strömt längs des ersten Filtermediums 4 (Feinstfilter) gemäß Pfeil 23 in Richtung zum Auslass 14 des Filtergehäuses 10.

Ein anderer Stromanteil 22 kann durch die in Serie geschalteten dritten und ersten Filtermedien 3 und 4 hindurchtreten. Bei tiefen Fluidtemperaturen ist die Viskosität jedoch so hoch, dass der hindurchtretende Stromanteil 22 deutlich weniger als der durch den Bypass 29 strömende Stromanteil 21 ist. Durch eine solche Anordnung wird eine Parallelschaltung aus grob filterndem Medium einerseits und Feinfiltermedium und Feinstfiltermedium andererseits erzielt. Dadurch kann der Druckabfall p2-p1 am Filtermedium gemäß Figur 1 auch bei tiefen Temperaturen des Fluids insgesamt gering gehalten werden. Damit lässt sich vermeiden, dass ein hochviskoses Fluid durch ein Feinfiltermedium und ein Feinstfiltermedium strömen muss, was zu einem erheblichen Druckabfall auf Grund der niedrigeren Viskosität an diesen Filtermedien führen würde.

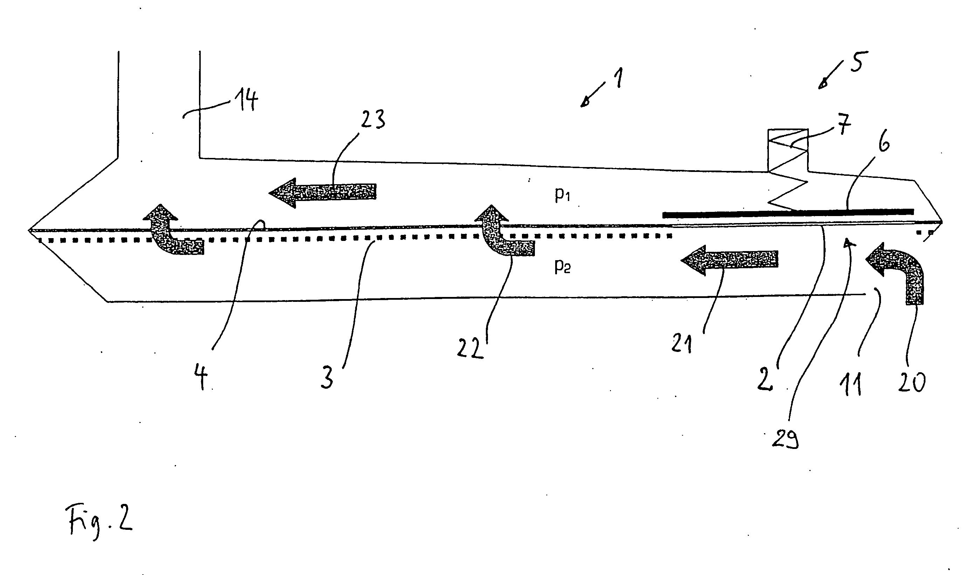

Im warmen Zustand des Fluides stellt sich eine Situation ein, wie sie schematisch in Figur 2 dargestellt ist. Ein niederviskoses Fluid ist nicht mehr imstande, eine genügende Gegenkraft gegen die von der Feder 7 in Richtung zum Bypass 29 aufgebrachte Andrückkraft aufzubringen. Damit ist eine Situation erreicht, in der die Platte 6 den Bypass 29 verschließt und dieser nicht mehr von einem Volumenstrom des Fluids durchströmt werden kann. Der in die Filtervorrichtung 10 eintretende Fluidvolumenstrom 20 entspricht dann dem Fluidvolumenstrom 22 durch das Feinfiltermedium und Feinstfiltermedium.

Wie aus Figur 2 ersichtlich ist, tritt somit im warmen Zustand des Fluides der gesamte Volumenstrom zunächst durch das dritte Filtermedium 3 (Feinfilter) und anschließend durch das erste Filtermedium 4 (Feinstfilter). Somit sind bei dieser Ausführungsform der Filtervorrichtung zwei Vorzüge miteinander gekoppelt: Im kalten Zustand des Fluides ist ein niedriger Druckabfall am Filtermedium bei ausreichender Filtrationsleistung gegeben, während im warmen Zustand des Fluids, welches den normalen Betriebszustand darstellt, ebenfalls ein niedriger Druckabfall am Filtermedium bei noch besserer Filtrationsleistung vorliegt.

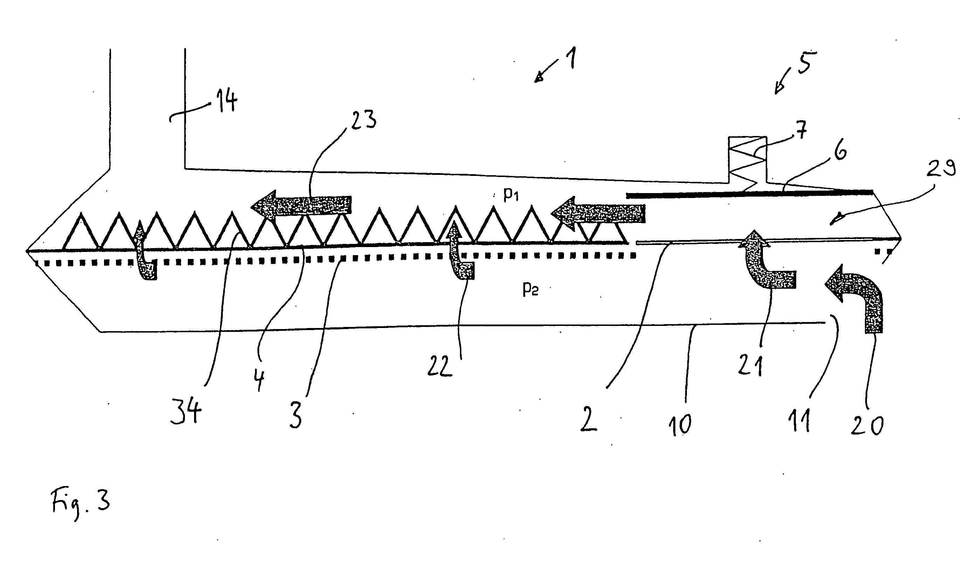

In Figur 3 ist eine zweite Ausführungsform der Erfindung analog zu Figur 1 schematisch dargestellt. Im Unterschied zur ersten Ausführungsform ist das erste Filtermedium 4 (Feinstfilter) mit einem plissierten Filter 34 aus Feinstfilter ausgebildet, so dass eine größere Filterfläche erzielt wird. Damit ist es möglich, eine noch bessere Filtrationsleistung zu erreichen. Das Feinstfiltermedium des ersten Filtermediums 4 und des plissierten Filters 34 kann so ausgebildet sein, dass es keine Stützfläche auf der Unterseite besitzt und direkt auf dem dritten Filtermedium 3 (Feinfilter) aufliegt. Andererseits kann es mit Stützmaterial die Eigenstabilität der dritten und ersten Filtermedien 3, 4 insgesamt erhöhen.

Mit dem als Feinstfilter ausgebildeten plissierten Filter 34 wird eine Filterfläche geschaffen, die üblicherweise nur in einem Druckölfilter vorhanden ist. Bei Einsatz einer solchen Ausführungsform in einem Saugölfilter können somit entweder die Wechselintervalle zum Austauschen eines Fluidfiltermediums bei einem Druckölfilter verlängert oder ein Druckölfilter vollständig überflüssig werden. Allgemein gilt, dass das Ziel, bei der erfindungsgemäßen Filtervorrichtung eine Filtrationsleistung wie bei einer Kombination aus herkömmlichem Saugfilter und Druckfilter zu ermöglichen, umso eher erreicht wird, wenn die Flächenverhältnisse der eingesetzten Filtermedien jenen bei der Kombination aus Saugfilter und Druckfilter entsprechen.

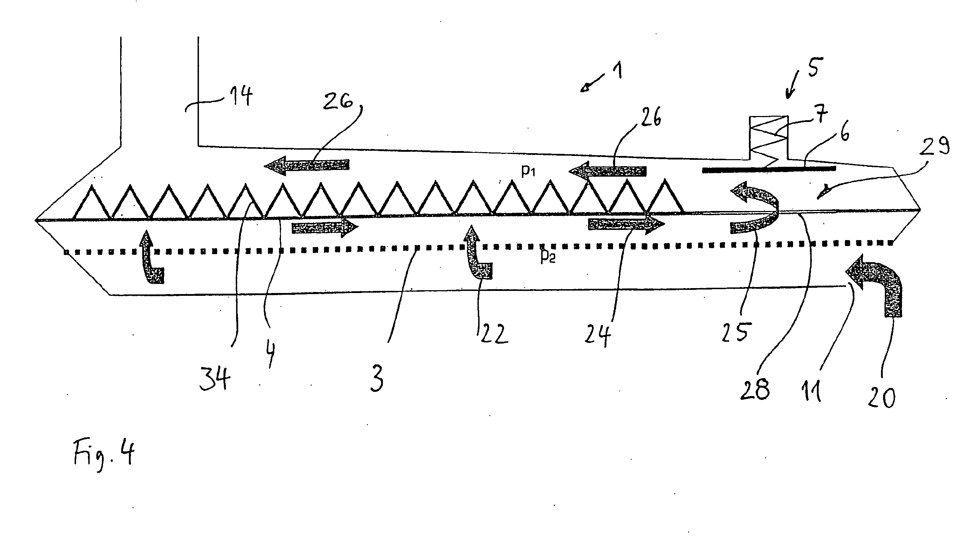

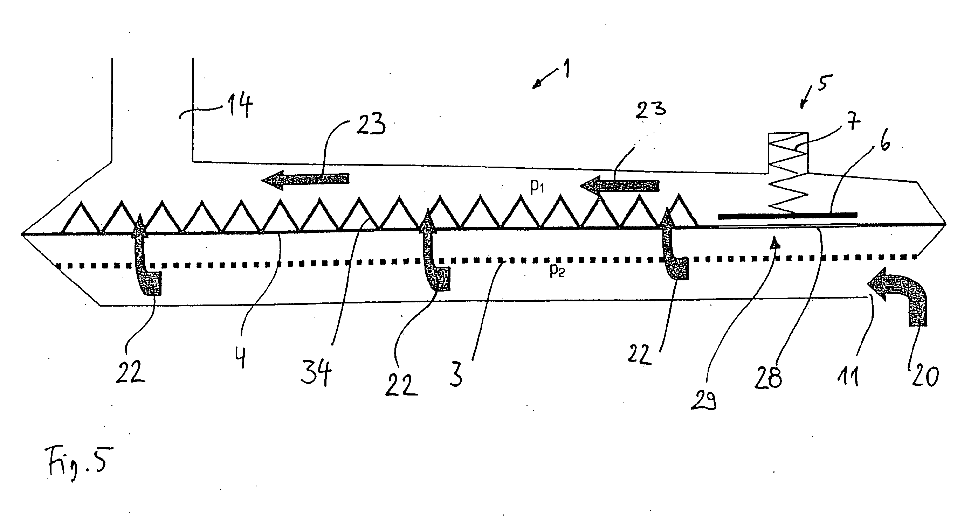

Die Figuren 4 und 5 zeigen eine dritte Ausführungsform gemäß der Erfindung. Ein Feinfiltermedium 3 ist dazu derart angeordnet, dass es die gesamte Querschnittsfläche der Filtervorrichtung abdeckt. Am Einlass 11 tritt ein Fluidvolumenstrom 20 in die Filtervorrichtung 1 ein und strömt durch das dritte Filtermedium 3 (Feinfilter). In einem Abstand zum dritten Filtermedium 3 ist oberhalb des dritten Filtermediums 3 ein erstes Filtermedium 4 (Feinstfilter) angeordnet, welches wie bei der ersten oder zweiten Ausführungsform der Erfindung nur einen Teil der Querschnittsfläche der Filtervorrichtung 1 bedeckt. Der andere, dazu benachbarte Teil der Querschnittsfläche ist bevorzugt als filterfreier Durchlass 28 ausgebildet Oberhalb des Durchlasses 28 ist das Stellglied 5 mit einer Platte 6 und einer Feder 7 vorgesehen.

Im kalten Zustand des Fluides tritt gemäß Fig. 4 der Fluidvolumenstrom 20, wie mit dem Pfeil 22 dargestellt, vollständig durch das Feinfiltermedium 3 hindurch und strömt, siehe Pfeil 24 , längs des Feinfiltermediums in Richtung zum filterfreien Durchlass 28, da dieser einen viel geringeren Strömungswiderstand als das erste Filtermedium 4 und des plissierte Filter 34 aufweist. Der Fluidvolumenstrom passiert den filterfreien Durchlass 28 gemäß Pfeil 25 und strömt im Wesentlichen oberhalb des ersten Filtermediums 4 (Feinstfilter) in Richtung zum Auslass 14, siehe Pfeil 26.

Im kalten Zustand des Fluides wird somit eine Situation erreicht wie sie bei herkömmlichen Saugölfiltern vorliegt. Im warmen Zustand des Fluides ist der filterfreie Durchlass 28 gemäß Fig. 5 von der Platte 6 abgedeckt, so dass kein Fluidvolumenstrom mehr dort hindurch passieren kann. Der gesamte Volumenstrom 22 tritt durch das dritte Filtermedium 3 (Feinfilter) und anschließend durch das erste Filtermedium 4 (Feinstfilter) hindurch und strömt dann oberhalb des ersten Filtermediums 4 gemäß Pfeil 23 zum Auslass 14. Ein geringer Fluidnebenstrom kann auch durch die Stirnseiten des seitlich offenen plissierten Feinstfiltermediums strömen.

Auch bei dieser Ausführungsform der Erfindung wird somit im kalten Zustand des Fluides ein relativ geringer Druckabfall bei guter Filtrationsleistung erzielt, während bei hoher Temperatur des Fluides auf Grund der niedrigeren Viskosität ein sehr geringer Druckabfall bei sehr guter Filtrationsleistung möglich ist.

Der Übergang zwischen kaltem Fluidzustand und warmem Fluidzustand erfolgt bei den vorstehend beschriebenen Filtervorrichtungen nicht abrupt, sondern kontinuierlich. Dies bedeutet, dass die Platte 6 des Stellglieds 5 nicht wie ein Schalter wirkt, der zwischen "ein" und "aus" schaltet. Vielmehr nähert sich die Platte 6 mit zunehmender Temperatur des Fluides dem grob filternden zweiten Filtermedium 2 bzw. dem filterfreien Durchlass 28 immer mehr an, bis es in seiner Endlage das grob filternde zweiten Filtermedium 2 bzw. den Durchlass 28 vollständig abdeckt. Bevor diese Endlage erreicht ist, tritt ein Nebeneffekt auf, der für die Selbstreinigung des grob filternden zweiten Filtermediums 2 von Bedeutung ist, wie nachfolgend beschrieben ist.

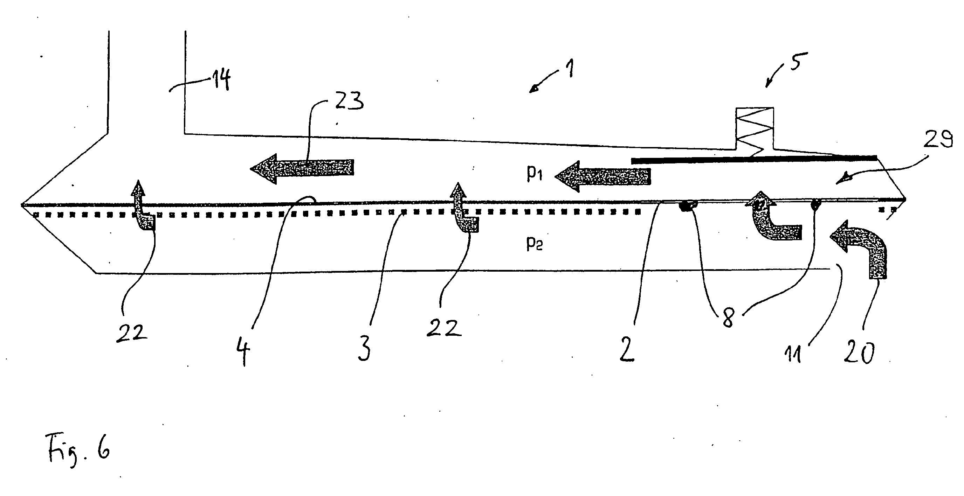

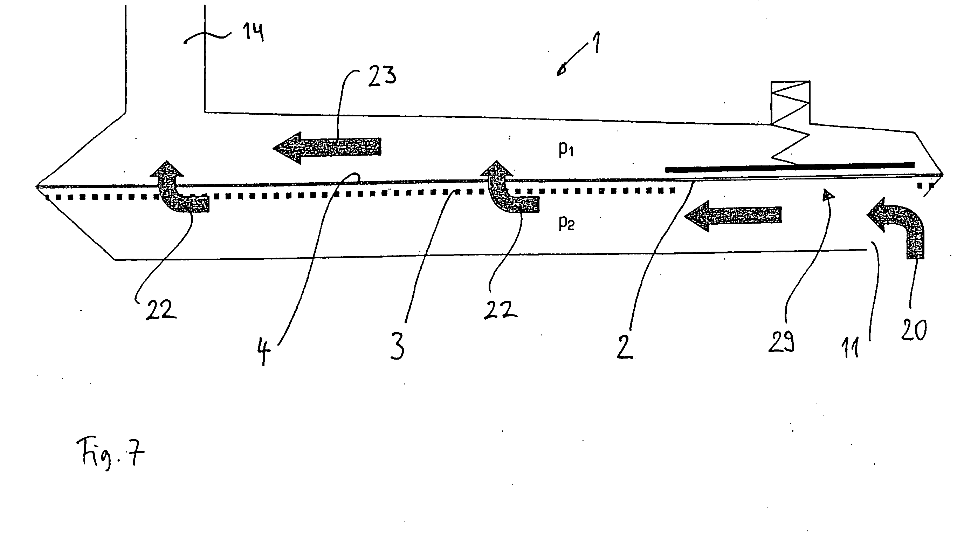

Bei dem ersten Ausführungsbeispiel aus Fig. 1 und Fig. 2 wird das grob filternde zweite Filtermedium 2 bei Verschließen des Bypasses durch den Bernoulli-Effekt selbsttätig von angelagerten Partikeln 8 abgereinigt (Fig. 6), so dass eine gegebenenfalls vorhandene geringe Schmutzaufnahmekapazität unrelevant ist. Die Standzeit der erfindungsgemäßen Filtervorrichtung wird dadurch deutlich erhöht. Die abgereinigte Filtervorrichtung ist in Fig. 7 dargestellt.

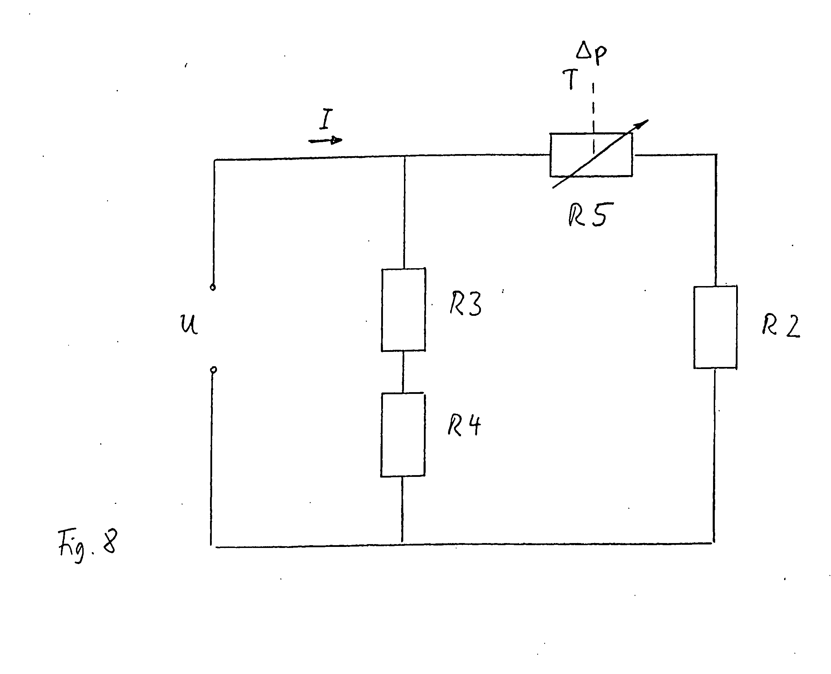

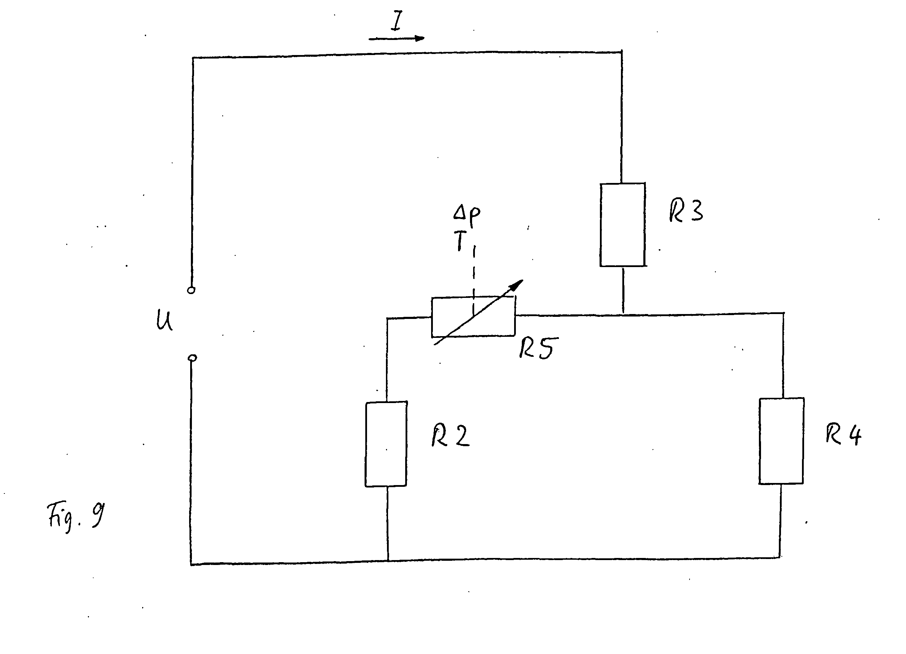

Die Anordnung der Filtermedien 2, 3 und 4 gemäß der erfindungsgemäßen Filtervorrichtung lässt sich schematisch wie in den Figuren 8 und 9 gezeigt darstellen. Figur 8 zeigt ein elektrisches Widerstandsnetzwerk mit den Widerständen *R2*, *R3, R4* und *R5*, durch welche ein Strom (current) / fließt, welcher von einer Spannungsquelle U getrieben wird. Die Spannungsquelle repräsentiert in diesem Fall den erzeugten Unterdruck einer Pumpe, wobei die Pumpe bewirkt, dass ein Fluidvolumenstrom durch die Filtermedien 2, 3 und 4 gelenkt wird. Die Filtermedien besitzen einen zugehörigen Widerstand R2, R3 und R4. Der Widerstand R5 ist als variabler Widerstand dargestellt und repräsentiert das Stellglied 5, welches in Abhängigkeit vom Differenzdruck am Filtermedium oder der Temperatur des Fluides den Fluidvolumenstrom durch das grob filternde zweiten Filtermedium 2, repräsentiert durch den Widerstand R2, zulässt oder nicht.

Der Fluidvolumenstrom teilt sich zwischen den parallel geschalteten Widerständen R2 und *(R3+R4)* je nach deren Größe auf. Im kalten Zustand des Fluides fließt der größte Anteil des Fluides durch den kleinsten Widerstand, in diesem Fall R2. Nur ein geringer Anteil des Fluides fließt durch die Widerstände *R3+R4.* Im warmen Zustand des Fluides ist ein Durchtritt durch das grob filternde zweite Filtermedium 2 nicht mehr möglich, so dass R5 als unendlich angesehen werden darf. Somit wird der Fließwiderstand des Fluides nur noch durch R3 *+R4* gebildet.

Bei der dritten Ausführungsform der Erfindung, siehe Fig. 4 und 5, ist die Schaltung der Filtermedien anders ausgebildet, siehe Figur 9. Der gesamte Fluidvolumenstrom tritt durch das dritte Filtermedium 3 (Feinstfilter) hindurch, in Fig. 9 mit R3 dargestellt. Je nach Temperatur des Fluides oder Differenzdruck am Filtermedium, repräsentiert durch den variablen Widerstand R5, strömt dann das Fluid entweder durch das grob filternde zweite Filtermedium 2, repräsentiert durch R2, oder das Feinstfiltermedium 4, repräsentiert durch R4. Damit liegt eine Parallelschaltung der Widerstände R2 und R4 vor, welche dem Widerstand R3 seriell nachgeschaltet sind.

Prinzipiell sind auch andere Schaltungen der Widerstände *R2, R3, R4* und *R5* in Kombination mit einlagigen Filtern, plissierten Filtern oder Taschenfiltern im Rahmen der Erfindung denkbar, um nur mit einem Saugfilter sowohl eine hohe Filtrationsleistung als auch einen geringen Druckabfall an den Filtermedien zu erzielen.

## Patentansprüche

1. Filtervorrichtung (1) zur Filterung eines Fluids, beispielsweise ein Ölfilter, welche zumindest ein erstes filterndes Medium (4) und einen Bypass (29) für das erste filternde Medium (4) aufweist, wobei die Filtervorrichtung (1) ein Ventil als Stellglied (5) aufweist, welches in Abhängigkeit von einem vorbestimmten Parameter des Fluids den Strom des Fluids durch den Bypass (29) beeinflusst,
**dadurchgekennzeichnet,**
**dass** eine Platte (6) als Ventilteller des Stellgliedes (5) als weiteres filterndes Medium ausgebildet ist, dessen Durchlässigkeit für niedrige Viskosität ausgelegt ist und bevorzugt dem ersten filternden Medium (4) entspricht.

2. Filtervorrichtung nach Anspruch 1,
**dadurch gekennzeichnet,**
**dass** das Stellglied (5) in Abhängigkeit von der Viskosität des Fluids, von einem Differenzdruck des Fluids am ersten filternden Medium (4) und/oder von der Temperatur des Fluides beeinflusst ist.

3. Filtervorrichtung nach Anspruch 1 oder 2,
**dadurch gekennzeichnet,**
**dass** die Platte (6) als Klappe oder Schieber ausgebildet ist.

4. Filtervorrichtung nach Anspruch 3,
**dadurch gekennzeichnet,**
**dass** das Stellglied (5) an dem Gehäuse (10) der Filtervorrichtung (1) angelenkt oder verschiebbar geführt ist.

5. Filtervorrichtung nach einem der Ansprüche 1 bis 4,
**dadurch gekennzeichnet,**
**dass** das Stellglied (5) mit einer Feder (7) entgegen der Flussrichtung des Fluids beaufschlagt ist, dass die Feder (7) das Betätigungsorgan des Stellglieds (5) bildet, und dass die Federkraft die Stellgröße des Stellglieds (5) vorgibt.

6. Filtervorrichtung nach Anspruche 5,
**dadurch gekennzeichnet,**
**dass** die Feder (7) temperaturabhängige Federeigenschaften hat.

7. Filtervorrichtung nach einem der Ansprüche 1 oder 2,
**dadurch gekennzeichnet,**
**dass** das Stellglied (5) federelastisch ausgebildet ist, und dass die Elastizität des Stellglieds (5) die Stellgröße vorgibt.

8. Filtervorrichtung nach Anspruch 6,
**dadurch gekennzeichnet,**
**dass** das Stellglied (5) als federelastische Folie ausgebildet ist, die so über dem Bypass (29) angeordnet ist, dass sie unter einer vorgegebenen Druckbelastung den Bypass (29) abdeckt, und unter erhöhter Druckbelastung nachgibt und einen Durchlass für das Fluid freigibt.

9. Filtervorrichtung nach einem der vorhergehenden Ansprüche,
**dadurch gekennzeichnet,**
**dass** die Bypassöffnung selbst ein zweites filterndes Medium (2) aufweist, dessen Durchlässigkeit größer ist als die Durchlässigkeit des ersten filternden Mediums (4).

10. Filtervorrichtung nach Anspruch 9,
**dadurch gekennzeichnet,**
**dass** vor dem ersten filternde Medium (4) ein drittes filterndes Medium (3) angeordnet ist, dessen Durchlässigkeit größer ist, als die Durchlässigkeit des ersten Filtermediums (4) und kleiner als die Durchlässigkeit des zweiten Filtermediums (2).

11. Filtervorrichtung nach einem der Ansprüche 1 bis 7, 8, 9,
**dadurch gekennzeichnet,**
**dass** in Flussrichtung vor dem ersten filternden Medium (4) und dem Bypass (29) und beabstandet zu diesen das bezüglich des ersten filternden Mediums (4) durchlässigere dritte filternde Medium (3) angeordnet ist, und dass der Bypass (29) als filterfreier Durchlass ausgebildet ist.

12. Filtervorrichtung nach einem der vorhergehenden Ansprüche,
**dadurch gekennzeichnet,**
**dass** das erste filternde Medium (4) einen plissierten Filter (34) aufweist.

13. Verwendung einer Filtervorrichtung nach einem der vorhergehenden Ansprüche,
**dadurch gekennzeichnet,**
**dass** die Filtervorrichtung (1) bei einem Automatikgetriebe eines Kraftfahrzeuges eingesetzt wird.

14. Verwendung einer Filtervorrichtung nach einem der Ansprüche 1 bis 12,
**dadurch gekennzeichnet,**
**dass** die Filtervorrichtung (1) in einem Saugfilter und/oder einem Druckfilter eingesetzt wird.

## Claims

1. A filter device (1) for filtering a fluid, such as an oil filter, which has at least one first filtering medium (4) and a bypass (29) for the first filtering medium (4),
wherein the filter device (1) has a valve as an actuator (5), which influences the flow of the fluid through the bypass (29) as a function of a predetermined parameter of the fluid,
**characterized in that**
a plate (6) is implemented as a valve disk of the actuator (5) as a further filtering medium, whose permeability is designed for low viscosity, and preferably corresponds to the first filtering medium (4).

2. The filter device according to Claim 1,
**characterized in that**
the actuator (5) is influenced as a function of the viscosity of the fluid, a differential pressure of the fluid at the first filtering medium (4), and/or the temperature of the fluid.

3. The filter device according to Claim 1 or 2,
**characterized in that**
the plate (6) is implemented as a flap or slider.

4. The filter device according to Claim 3,
**characterized in that**
the actuator (5) is linked to or displaceably guided on a housing (10) of the filter device (1).

5. The filter device according to one of Claims 1 through 4,
**characterized in that**
the actuator (5) has a spring (7) applied to it against the flow direction of the fluid, the spring (7) forms the actuating element of the actuator (5), and the spring force predefines the manipulated variable of the actuator (5).

6. The filter device according to Claim 5,
**characterized in that**
the spring (7) has temperature-dependent spring properties.

7. The filter device according to one of Claims 1 or 2,
**characterized in that**
the actuator (5) is implemented as elastic and the elasticity of the actuator (5) predefines the manipulated variable.

8. The filter device according to Claim 6,
**characterized in that**
the actuator (5) is implemented as an elastic film, which is situated over the bypass (29) in such a way that it covers the bypass (29) under a predefined pressure load, and yields under elevated pressure load and releases a passage for the fluid.

9. The filter device according to one of the preceding claims,
**characterized in that**
the bypass opening has a second filtering medium (2), whose permeability is greater than the permeability of the first filtering medium (4).

10. The filter device according to Claim 9,
**characterized in that**
a third filtering medium (3), whose permeability is greater than the permeability of the first filter medium (4) and less than the permeability of the second filter medium (2), is situated in front of the first filtering medium (4).

11. The filter device according to one of Claims 1 through 7, 8, 9,
**characterized in that**
the third filter medium (3), which is more permeable than the first filtering medium (4), is situated in the flow direction in front of the first filtering medium (4) and the bypass (29) and distal thereto, and the bypass (29) is implemented as a filter-free passage.

12. The filter device according to one of the preceding claims,
**characterized in that**
the first filtering medium (4) has a pleated filter (34).

13. Use of a filter device according to one of the preceding claims,
**characterized in that**
the filter device (1) is used in an automatic transmission of a motor vehicle.

14. Use of a filter device according to one of claims 1 to 12,
**characterized in that**
the filter device (1) is used in a suction-side filter and/or a pressure-side filter.

## Revendications

1. Dispositif de filtration (1) pour la filtration d'un fluide, par exemple filtre à huile, présentant au moins un premier support filtrant (4) et une dérivation (29) pour le premier support filtrant (4), lequel dispositif de filtration (1) présente une vanne servant d'organe de réglage (5) qui influence, en fonction d'un paramètre prédéterminé du fluide, l'écoulement du fluide à travers la dérivation (29),
**caractérisé en ce**
**qu'**une plaque (6) formant le disque de vanne de l'organe de réglage (5) est conformée comme un autre support filtrant dont la perméabilité est conçue pour une faible viscosité et correspond de préférence au premier support filtrant (4).

2. Dispositif de filtration selon la revendication 1,
**caractérisé en ce**
**que** l'organe de réglage (5) agit en fonction de la viscosité du fluide, d'une différence de pression du fluide au niveau du premier support filtrant (4) et/ou de la température du fluide.

3. Dispositif de filtration selon la revendication 1 ou 2,
**caractérisé en ce**
**que** la plaque (6) est conformée comme un clapet ou un tiroir.

4. Dispositif de filtration selon la revendication 3,
**caractérisé en ce**
**que** l'organe de réglage (5) est articulé ou guidé de façon coulissante sur le boîtier (10) du dispositif de filtration (1).

5. Dispositif de filtration selon l'une des revendications 1 à 4,
**caractérisé en ce**
**que** l'organe de réglage (5) est contraint par un ressort (7) contre le sens d'écoulement du fluide, en ce que le ressort (7) forme l'organe d'actionnement de l'organe de réglage (5) et en ce que la force de ressort détermine la grandeur de réglage de l'organe de réglage (5).

6. Dispositif de filtration selon la revendication 5,
**caractérisé en ce**
**que** le ressort (7) a des propriétés d'élasticité qui dépendent de la température.

7. Dispositif de filtration selon l'une des revendications 1 ou 2,
**caractérisé en ce**
**que** l'organe de réglage (5) est conçu avec une élasticité de ressort et en ce que l'élasticité de l'organe de réglage (5) détermine la grandeur de réglage.

8. Dispositif de filtration selon la revendication 6,
**caractérisé en ce**
**que** l'organe de réglage (5) est conçu comme une feuille élastique qui est disposée par-dessus la dérivation (29) de telle manière qu'elle couvre la dérivation (29) lorsqu'elle est soumise à une pression prédéterminée et cède sous une pression accrue en libérant le passage pour le fluide.

9. Dispositif de filtration selon l'une des revendications précédentes,
**caractérisé en ce**
**que** l'ouverture de dérivation présente elle-même un deuxième support filtrant (2) dont la perméabilité est plus grande que la perméabilité du premier support filtrant (4).

10. Dispositif de filtration selon la revendication 9,
**caractérisé en ce**
**qu'**il est prévu avant le premier support filtrant (4) un troisième support filtrant (3) dont la perméabilité est plus grande que la perméabilité du premier support filtrant (4) et plus petite que la perméabilité du deuxième support filtrant (2).

11. Dispositif de filtration selon l'une des revendications 1 à *7*, 8, 9,
**caractérisé en ce**
**que** le troisième support filtrant (3) plus perméable que le premier support filtrant (4) est disposé dans le sens d'écoulement en amont du premier support filtrant (4) et de la dérivation (29) et à distance de ceux-ci, et en ce que la dérivation (29) est conçue comme un passage sans filtre.

12. Dispositif de filtration selon l'une des revendications précédentes,
**caractérisé en ce**
**que** le premier support filtrant (4) présente un filtre plissé (34).

13. Utilisation d'un dispositif de filtration selon l'une des revendications précédentes,
**caractérisée en ce**
**que** le dispositif de filtration (1) est utilisé dans une boîte de vitesses automatique d'un véhicule à moteur.

14. Utilisation d'un dispositif de filtration selon l'une des revendications 1 à 12,
**caractérisée en ce**
**que** le dispositif de filtration (1) est inséré dans un filtre d'aspiration et/ou un filtre sous pression.
